(19) Europäisches Patentamt
European Patent Office
Office européen des brevets

(11) EP 3 725 819 B1

(12) **EUROPÄISCHE PATENTSCHRIFT**

(45) Veröffentlichungstag und Bekanntmachung des Hinweises auf die Patenterteilung:
**13.10.2021 Patentblatt 2021/41**

(51) Int Cl.:
***C08G 64/18*** *(2006.01)* ***C08G 81/02*** *(2006.01)*
***C08L 33/12*** *(2006.01)* ***C08L 69/00*** *(2006.01)*

(21) Anmeldenummer: **19170040.0**

(22) Anmeldetag: **18.04.2019**

(54) **VERFAHREN ZUR HERSTELLUNG EINER POLYCARBONAT-FORMMASSE**

METHOD FOR PRODUCING A POLYCARBONATE MOULDING COMPOSITION

PROCÉDÉ DE FABRICATION D’UNE MASSE DE FORMAGE EN POLYCARBONATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.10.2020 Patentblatt 2020/43**

(73) Patentinhaber: **Covestro Deutschland AG**
**51373 Leverkusen (DE)**

(72) Erfinder:
- **Seidel, Andreas, Dr.**
  **41542 Dormagen (DE)**
- **Bubmann, Tobias, M. Sc.**
  **95444 Bayreuth (DE)**

(74) Vertreter: **Levpat**
**c/o Covestro AG**
**Gebäude 4825**
**51365 Leverkusen (DE)**

(56) Entgegenhaltungen:
**EP-A1- 1 063 253** **WO-A1-2016/138246**
**US-B2- 10 155 845**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 725 819 B1

## Beschreibung

Die vorliegende Erfindung betrifft ein Verfahren zur Herstellung einer Polycarbonat-Formmasse, die in einem solchen Verfahren hergestellte Formmasse selbst und Formkörper enthaltend eine solche Formmasse.

Polycarbonat-Formmassen sind seit vielen Jahren bekannt. Aus den Formmassen werden Formkörper für eine Vielzahl von Anwendungen, beispielsweise für den Automobilbereich, für den Bausektor und für den Elektronikbereich hergestellt.

Durch Abmischung von Polycarbonat mit weiteren polymeren Komponenten und Additiven lassen sich Polycarbonat-Blends herstellen. Die Eigenschaften solcher Polycarbonat-Formmassen und der daraus hergestellten Formkörper lassen sich durch geeignete Wahl ihrer Zusammensetzung und Herstellbedingungen in weiten Bereichen variieren und an die Anforderungen der jeweiligen Anwendung anpassen.

Polycarbonat ist allerdings mit vielen polymeren Blendpartnern wie Vinylpolymeren, Polyolefinen oder Polyestern nicht oder nicht vollständig mischbar, auch nicht durch Extrusion in der Schmelze. Aufgrund dieser oft vorliegenden Teil- oder Unverträglichkeit bilden sich in den Polycarbonat-Blends separierte Phasen aus. Je nach den Anteilen der jeweiligen polymeren Komponenten bildet dann beispielsweise Polycarbonat eine Matrixphase, in der dann etwa das Vinylcopolymer in Form von mehr oder minder fein verteilten, mikroskopisch sichtbaren polymeren Phasen vorliegt.

Üblicherweise weisen die mit Polycarbonat unverträglichen oder teilverträglichen polymeren Blendpartner einen von Polycarbonat verschiedenen Brechungsindex auf. Daher führt das Vorliegen von mehrphasigen Zusammensetzungen zu einem nicht transparenten oder auch komplett opaken Erscheinungsbild der aus den Zusammensetzungen hergestellten Formkörper. Das ist auch dann der Fall, wenn die einzelnen Blendpartner wie etwa Polycarbonat und Polymethylmethacrylat (PMMA) selbst eine hohe optische Transparenz aufweisen.

Weiterhin sind die Phasengrenzflächen in solchen mehrphasigen Zusammensetzungen auch hinsichtlich mechanischer Eigenschaften Schwachpunkte. Risse im Material können sich entlang dieser Grenzflächen ausbreiten und zu Versagen bei von außen einwirkenden Spannungen oder zu Materialdelamination führen.

Eine Möglichkeit, die Verträglichkeit von Polycarbonat mit polymeren Blendpartnern zu erhöhen und damit die optischen und/oder mechanischen Eigenschaften zu verbessern, ist der Einsatz von Copolymeren enthaltend Einheiten aus sowohl Polycarbonat als auch dem polymeren Blendpartner. Bevorzugt handelt es sich bei solchen Copolymeren um Block- oder Pfropfpolymere. Die Copolymere reichern sich dann entlang der Phasengrenzflächen an und führen zu einer erhöhten Verträglichkeit zwischen Polycarbonat und dem polymeren Blendpartner. Dies kann sich dann in den angestrebten Eigenschaftsverbesserungen äußern.

Zur Herstellung der erwähnten Copolymere ist ein bereits beschriebener Ansatz die in situ Reaktion zwischen Polycarbonat und dem polymeren Blendpartner während der Compoundierung in der Schmelze in Anwesenheit eines Katalysators (sogenannte Reaktivcompoundierung oder Reaktivkompatibilisierung). Einige Dokumente offenbaren ein solches Verfahren für Blends aus Polycarbonat und PMMA.

WO 2016/138246 A1 offenbart transparente Polycarbonat/PMMA-Blends enthaltend 9,9 bis 40 Gew.-% Polycarbonat und 59,9 bis 90 Gew.-% PMMA, welche in einer Schmelzecompoundierung unter Einsatz von 0,0025 bis 0,1 Gew.-% eines Zinn-Katalysators hergestellt werden.

WO 2016/189494 A1 offenbart transparente Polycarbonat/PMMA-Blends enthaltend 80 bis 95 Gew.-% eines speziell spezifizierten verzweigten Polycarbonats mit einem End-Cap-Gehalt von 45% bis 80% und 4,9 bis 20 Gew.-% PMMA, welche in einer Schmelzecompoundierung durch Umesterung unter Einsatz von 0,1 bis 1,5 Gew.-% eines Katalysators, bevorzugt ausgewählt aus Zn-, Sn- und Ag-Verbindungen hergestellt werden.

A.K. Singh, et al. "Reactive Compatibilization of Polycarbonate and Poly(methyl)methacrylate in the Presence of a Novel Transesterification Catalyst SnC12-2H20", J. Phys. Chem. B 2011, 115, 1601-1607 offenbart transparente Polycarbonat/PMMA-Formmassen hergestellt in einem Reaktivcompoundierungsverfahren unter Verwendung von $SnCl_2 \cdot 2H_20$ als Katalysator.

A.K. Singh, et al. "Evidence for in situ graft copolymer formation and compatibilization of PC and PMMA during reactive extrusion processing in the presence of the novel organometallic transesterification catalyst tin(II) 2-ethylhexanoate", RSC Advances, 2012, 2, 10316-10323 offenbart transluzente PC/PMMA-Formmassen hergestellt in einem Reaktivcompoundierungsverfahren unter Verwendung von Zinn(II)-2-ethylhexanoat als Katalysator.

M. Penco, et al. "PMMA/PC Blends: Effect of Mixing Conditions on Compatibility", Macromol. Symp. 2007, 247, 252-259 offenbart homogene Blends aus PC und PMMA, welche unter Verwendung von 1 Gew.-% Tetrabutylammoniumtetraphenylborat als Umesterungskatalysator in einem diskontinuierlichen Kneter in der Schmelze mit Verweilzeiten von 2 Minuten hergestellt wurden.

Eine wesentliche Rolle kommt bei der beschriebenen Reaktivcompoundierung in der Regel der Auswahl eines geeigneten Katalysator zu. Angesichts der üblicherweise kurzen Verweilzeiten von oftmals weniger als einer Minute, gilt das insbesondere, sofern angestrebt wird, die Reaktivcompoundierung in einem kontinuierlichen Doppelwellenextruder durchzuführen. Dabei sollte der Katalysator so reaktiv sein, dass er in möglichst geringen Mengen zugegeben werden kann. Zu hohe Anteile von Katalysator können beim Verbleib des Katalysator im Polycarbonat-Blend zu unerwünschten Effekten auf die Eigenschaften wie etwa den Farbeindruck (Vergilbung) führen.

Eine zur Verträglichkeitsvermittlung (d.h. Kompatibilisierung) ausreichende Umsetzung von Polycarbonat und polymerem Blendpartner zu einem Copolymer kann in manchen Polycarbonat-Blends bereits phänomenologisch visuell anhand der Transparenz bzw. Trübung der hergestellten Blends beurteilt werden. Dies ist beispielsweise bei Polycarbonat/PMMA Zusammensetzungen der Fall, bei denen wie bereits erwähnt beide Polymere eine hohe Transparenz aufweisen, aber erst durch eine Verbesserung der Phasenverträglichkeit (im Rahmen der vorliegenden Erfindung auch als Polymerverträglichkeit bezeichnet) auch das Blend aus Polycarbonat und PMMA hinreichend transparent wird.

Die Phasenverträglichkeit kann auch anhand von mikroskopischen Aufnahmen, z. B. mittels TEM evaluiert werden. In Fällen, in denen sich die Domänen der Blendpartner mikroskopisch unterscheiden lassen, gibt die Domänengröße der dispersen Phase einen Anhaltspunkt für die Verträglichkeit. Wenn durch geeignete Maßnahmen die Phasenverträglichkeit verbessert wird, verkleinern sich diese Domänen,

Analytisch kann die chemische Umsetzung von Polycarbonat mit Blendpartnern auch unter Ausbildung eines Block- bzw. Pfropfcopolymers während der Compoundierung über die Abnahme des Gehalts funktioneller Gruppen im Blendpartner, beispielsweise über geeignete spektroskopische Verfahren (z.B. FTIR oder NMR) bzw. eine titrimetrische Bestimmung erfolgen. Ebenso ist der Nachweis einer solchen Umsetzung unter Bildung eines Block- bzw. Pfropfcopolymers oft möglich durch selektive Lösungsversuche, welche bevorzugt mit einer spektroskopischen Charakterisierung der in verschiedenen Lösungsmitteln löslichen und/oder unlöslichen Anteilen gekoppelt werden. Hierbei macht man sich zu Nutze, dass das Polycarbonat, der polymere Blendpartner und das durch deren Umsetzung gebildete Block- oder Pfropfcopolymer in der Regel unterschiedliche Polarität und somit Löslichkeiten aufweisen, wodurch eine Separation dieser Polymers möglich ist.

Hinsichtlich eines geeigneten Verfahrens zur Umsetzung von Polycarbonat mit einem polymeren Blendpartner und der Auswahl des Katalysators bestand auch angesichts der beschriebenen Offenbarungen weiterhin Verbesserungsbedarf.

Es war also wünschenswert, ein Verfahren zur Herstellung von thermoplastischen Formmassen bereitzustellen, in dem Polycarbonat mit einem polymeren Blendpartner und optional weiteren Komponenten vermischt und ein hinsichtlich der Polymerverträglichkeit von Polycarbonat und polymeren Blendpartner verbessertes Blend erhalten wird, wobei sich die verbesserte Polymerverträglichkeit durch eine bessere Phasendurchmischung, das heißt eine feinteiligere Phasendispergierung oder eine Polymermischbarkeit in einem größeren Mischungsbereich äußert. Solche Blends mit verbesserter Polymerverträglichkeit von Polycarbonat und polymeren Blendpartner sollen beispielsweise verbesserte optische (beispielsweise Transparenz und Eigenfarbe) und/oder verbesserte mechanische Eigenschaften (beispielsweise erhöhte Steifigkeit, Härte, Zähigkeit, Chemikalien-/Spannungsrissbeständigkeit) aufweisen.

Überraschenderweise wurde gefunden, das Verfahren zur Herstellung einer thermoplastischen Formmasse enthaltend

A) mindestens ein aromatisches Polycarbonat und
B) ein weiteres Polymer, welches von Polymer A chemisch verschieden ist und welches mindestens eine Art funktioneller Gruppen ausgewählt aus Ester-, Epoxy-, Hydroxy-, Carboxy- und Carbonsäureanhydrid- Gruppen enthält, umfassend die Schritte

a) Aufschmelzen und Durchmischen der Komponenten A und B in Anwesenheit eines Katalysators gemäß Komponente C bei einer Temperatur im Bereich von 200°C bis 350°C und
b) Verfestigen der Zusammensetzung durch Abkühlung der Zusammensetzung,

wobei die Komponente A ein mittleres Molekulargewicht $M_w$, gemessen durch Gelpermeationschromatographie bei Raumtemperatur in Methlylenchlorid mit auf Bisphenol A basiertem Polycarbonat als Standard, von mindestens 3000 g/mol aufweist, dadurch gekennzeichnet dass,

im Verfahrensschritt a) zumindest ein Teil der Komponente A mit der Komponente B zu einem Copolymer umgesetzt wird

und wobei der Katalysator C ein Phosphonium-Salz gemäß Formel (4) ist

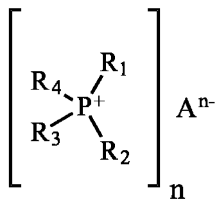 (4)

wobei

| | |
|---|---|
| $R_1$ und $R_2$ | jeweils unabhängig voneinander für $C_1$-$C_{10}$ Alkyl stehen, |
| $R_3$ und $R_4$ | jeweils unabhängig voneinander für $C_1$-$C_{10}$-Alkyl oder $C_6$-$C_{12}$-Aryl stehen, |
| $A^{n-}$ | für das Anion einer Carboxylsäure steht und |
| n | für 1, 2 oder 3 steht. |

die erfindungsgemäße Aufgabe löst.

Bei den Komponenten A und B handelt es sich bevorzugt um Feststoffe bei Raumtemperatur.

Optional können in Schritt a) weiterhin als Komponente D ein oder mehrere Polymeradditive und/oder weitere polymere Blendpartner verschieden von den Komponenten A und B eingesetzt werden.

Das Verfahren kann auf üblichen Aggregaten wie beispielsweise Innenknetern, Doppelwellenextrudern, Planetwalzenextrudern und kontinuierlichen Knetern durchgeführt werden. Bevorzugt ist die Durchführung mittels eines Doppelwellenextruders.

Die Durchmischung der einzelnen Bestandteile der Zusammensetzungen kann in bekannter Weise sowohl sukzessive als auch simultan erfolgen. Das bedeutet, dass beispielsweise manche der Bestandteile über den Haupteinzug eines Extruders dosiert und die restlichen Bestandteile über einen Seitenextruder später im Compoundierverfahren zugeführt werden können.

Wesentlich ist aber, dass schließlich die Komponenten A und B in flüssiger Form - beziehungsweise sofern es sich um bei Raumtemperatur polymere Feststoffe handelt, in aufgeschmolzener Form - bei einer Temperatur im Bereich von 200°C bis 350°C in Anwesenheit der Komponente C vorliegen.

Das Verfahren findet somit bei einer Mindesttemperatur statt, die - falls es sich bei den Komponenten A und/oder B um polymere Feststoffe handelt - oberhalb der Plastifizierungstemperaturen dieser Komponenten liegt. Falls es sich bei den Komponenten A und/oder B um kristalline polymere Feststoffe handelt, findet das Verfahren bevorzugt oberhalb der Schmelzetemperaturen statt. Die Plastifizierungstemperaturen und Schmelzetemperaturen richten sich nach der konkreten chemischen Struktur der Komponenten A und B.

Bevorzugt findet das Verfahren bei einer Temperatur unterhalb der jeweiligen Zersetzungstemperaturen der Ausgangskomponenten A bis D statt.

Bevorzugt findet das Verfahren in einem Temperaturbereich von 220 bis 300°C, besonders bevorzugt von 230°C bis 270°C statt.

Die Verweilzeit der Komponenten bei dieser Temperatur liegt bevorzugt in einem Bereich von 10 Sekunden bis 2 Minuten, weiter bevorzugt 15 Sekunden bis 1 Minute.

Unter Durchmischung wird auch Dispergierung der Komponenten ineinander verstanden, falls die Komponenten sich nicht vollständig ineinander mischen oder falls als Komponente D Bestandteile enthalten sind, die auch bei einer Temperatur von 200 °C bis 350°C als Feststoff vorliegen. Solche Komponenten können beispielsweise Füll-und Verstärkungsstoffe sein.

Nach Schritt a) kann auch ein Entgasen der vorliegenden Zusammensetzung durch Anlegen eines Unterdrucks erfolgen. Als Absolutdruck wird bevorzugt ein Druck von maximal 400 mbar, weiter bevorzugt von maximal 200 mbar, besonders bevorzugt von maximal 100 mbar eingestellt.

Es ist auch möglich, dass der Katalysator im Schritt a) oder nach Schritt a) deaktiviert oder entfernt wird. Das kann den Vorteil aufweisen, dass eine unerwünschte Weiterreaktion zwischen den Komponenten A und B während einer nachfolgenden Verarbeitung zu Formkörpern unterbunden wird.

Nach oder direkt vor Schritt b) kann noch eine Granulierung durchgeführt werden.

Im Allgemeinen handelt es sich bei dem Copolymer aus der Umsetzung der Polymere A und B um ein Blockcopolymer oder Pfropfcopolymer.

Auch bevorzugt findet bei der Umsetzung der Polymere A und B eine Ringöffnungsadditionsreaktion oder eine Umesterungsreaktion statt. In diesen Fällen ist es für die Realisierung hoher Umsatzgrade nicht erforderlich, ein Vakuum zur Entfernung von flüchtigen Reaktionsprodukten anzulegen.

Sofern es sich beim Polymer B um ein Epoxy-Gruppen enthaltendes Vinyl(co)polymer oder ein Epoxy-Gruppen

enthaltendes Polyolefin handelt, werden in Verfahrensschritt a) bevorzugt mindestens 5 Mol.-%, weiter bevorzugt mindestens 10 Mol %, besonders bevorzugt mindestens 15 Mol % der Epoxygruppen im Polymer B umgesetzt.

Es ist weiterhin bevorzugt, dass die im Schritt a) eingesetzte Mischung der Komponenten A und B einen Restfeuchtegehalt von 0,01 bis 0,50 Gew.-%, weiter bevorzugt von 0,07 bis 0,20 Gew.-%, jeweils bezogen auf die Summe an A und B aufweist. Durch eine Restfeuchte in diesem Bereich wird ein höherer Reaktionsumsatz und somit eine höhere Ausbeute an Copolymer aus den Polymeren A und B erzielt. Bei zu hoher Feuchtigkeit besteht die Gefahr von unerwünscht hohem Molekulargewichtsabbau.

Vorzugsweise werden in Schritt a) des erfindungsgemäßen Verfahrens

0,5 bis 99 Gew.-%, weiter bevorzugt 10 bis 89,5 Gew.-%, besonders bevorzugt 30 bis 84,5 Gew.-% der Komponente A,

0,5 bis 99 Gew.-%, weiter bevorzugt 10 bis 89,5 Gew.-%, besonders bevorzugt 15 bis 69,5 Gew.-% der Komponente B,

0,01 bis 0,5 Gew.-%, weiter bevorzugt 0,02 bis 0,25 Gew.-%, besonders 0,03 bis 0,1 Gew.-% der Komponente C

eingesetzt.

Sofern im erfindungsgemäßen Verfahren Komponente D eingesetzt wird, so wird diese Komponente bevorzugt in einem Anteil von 0,1 bis 50 Gew.-%, weiter bevorzugt von 0,3 bis 30 Gew.-%, besonders bevorzugt von 0,4 bis 20 Gew.-% verwendet.

**Komponente A**

Als Komponente A kommt ein aromatisches Polycarbonat zum Einsatz. Es können auch Mischungen von mehreren aromatischen Polycarbonaten eingesetzt werden.

Erfindungsgemäß geeignete aromatische Polycarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (1)

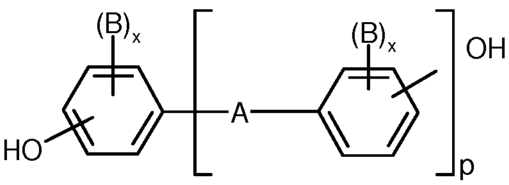

(1),

wobei

A eine Einfachbindung, $C_1$ bis $C_5$-Alkylen, $C_2$ bis $C_5$-Alkyliden, $C_5$ bis $C_6$-Cycloalkyliden, - O-, -SO-, -CO-, -S-, $-SO_2-$, $C_6$ bis $C_{12}$-Arylen, an das weitere aromatische gegebenenfalls Heteroatome enthaltende Ringe kondensiert sein können, oder ein Rest der Formel (2) oder (3)

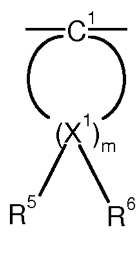

(2)

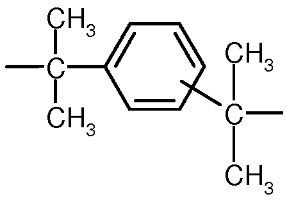

(3)

B jeweils $C_1$ bis $C_{12}$-Alkyl, vorzugsweise Methyl, Halogen, vorzugsweise Chlor und/oder Brom
x jeweils unabhängig voneinander 0, 1 oder 2,
p 1 oder 0 sind, und
$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate. Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A). Es können die Diphenole einzeln oder als beliebige Mischungen eingesetzt werden. Die Diphenole sind literaturbekannt oder nach literaturbekannten Verfahren erhältlich.

Für die Herstellung der aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die aromatischen Polycarbonate haben mittlere Molekulargewichte (Gewichtsmittel $M_w$, gemessen durch GPC (Gelpermeationschromatographie) bei Raumtemperatur in Methlylenchlorid mit Polycarbonatstandard auf Basis Bisphenol A) von mindestens 3000 g/mol, bevorzugt höchstens 50000 g/mol, weiter bevorzugt von 5000 bis 40000 g/mol, besonders bevorzugt von 10000 bis 35000 g/mol, am meisten bevorzugt von 20000 bis 33000 g/mol.

Geeignete Polycarbonate mit $M_w$ in am meisten bevorzugten Bereich sind beispielsweise Makrolon™ M2408 und Makrolon™ M2606 (Covestro Deutschland AG, Leverkusen).

Durch die bevorzugten Bereiche wird in den erfindungsgemäßen Zusammensetzungen eine besonders vorteilhafte Balance aus mechanischen und rheologischen Eigenschaften erreicht.

Die aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Bevorzugt werden lineare aromatische Polycarbonate, weiter bevorzugt auf Basis von Bisphenol-A, eingesetzt.

**Komponente B**

Als Komponente B wird ein von Komponente A chemisch verschiedenes Polymer eingesetzt enthaltend mindestens eine Art funktioneller Gruppen ausgewählt aus Ester-, Hydroxy-, Carboxy-, Carbonsäureanhydrid- und Epoxygruppen.

Die Estergruppe kann bei Polymeren gemäß Komponente B sowohl Bestandteil der Polymerkette (Polymerrückgrats), wie in einem Polyester der Fall, als auch eine nicht am Aufbau der Polymerkette direkt beteiligte funktionelle Gruppe eines Monomers, wie bei einem Acrylatpolymer der Fall, sein.

Es können auch Mischungen verschiedener solcher Polymere eingesetzt werden. Dabei können die Mischungen jeweils Polymere mit gleichartigen funktionelle Gruppen oder Polymere mit unterschiedlichen funktionellen Gruppen umfassen.

Bevorzugt enthält das Polymer B mindestens eine Art funktioneller Gruppen ausgewählt aus Ester-, Carboxy-, Epoxy- und aromatischen Hydroxy-Gruppen.

Besonders bevorzugt enthält das Polymer B mindestens eine Art funktioneller Gruppen ausgewählt aus Ester- und Epoxy-Gruppen.

Im Rahmen der vorliegenden Erfindung werden Polymere enthaltend Carbonat-Gruppen, also Ester der Kohlensäure, sofern sie keine aromatischen Struktureinheiten enthalten, ebenfalls als Polymere gemäß Komponente B angesehen.

Bevorzugt ist die Komponente B ein Polymer ausgewählt aus funktionelle Gruppen enthaltenden Vinyl(co)polymeren, funktionelle Gruppen enthaltenden Polyolefinen sowie Polyestern.

Bei den erfindungsgemäßen funktionelle Gruppen enthaltenden Vinyl(co)polymeren handelt es sich um (Co)Polymerisate von mindestens einem Monomeren aus der Gruppe der (Meth)-Acrylsäure-(C1 bis C8)-Alkylester (wie beispielsweise Methylmethacrylat, n-Butylacrylat, tert.-Butylacrylat), ungesättigte Carbonsäuren und Carbonsäureanhydride sowie weiterer Vinylmonomere enthaltend Ester-, Hydroxy-, Carboxy-, Carbonsäureanhydrid- und Epoxygruppen. Die genannten Monomere können weiterhin copolymerisiert werden mit Vinylaromaten (wie beispielsweise Styrol, $\alpha$-Methylstyrol), Vinylcyaniden (ungesättigte Nitrile wie beispielsweise Acrylnitril und Methacrylnitril) und Olefinen (wie Ethylen).

Epoxygruppen werden beispielsweise eingebracht, indem als weiteres Monomer Glycidylmethacylat zusammen mit den anderen Monomeren copolymerisiert wird.

Diese (Co)Polymere sind harzartig und kautschukfrei. Derartige (Co)Polymere sind bekannt und lassen sich durch radikalische Polymerisation, insbesondere durch Emulsions-, Suspensions-, Lösungs- oder Massepolymerisation herstellen.

Ein besonders geeignetes Vinylpolymer gemäß Komponente B ist Polymethylmethacrylat. Weiterhin besonders geeignete Vinylpolymere gemäß Komponenten B sind Styrol-Acrylnitril-Glycidylmethacrylat-Terpolymere.

In Frage kommende Polyester können aliphatische oder aromatische Polyester sein.

In bevorzugter Ausführungsform sind die Polyester aromatisch, weiter bevorzugt handelt es sich um Polyalkylenterephthalate.

Es handelt sich hierbei in besonders bevorzugter Ausführungsform um Reaktionsprodukte aus aromatischen Dicarbonsäuren oder ihren reaktionsfähigen Derivaten, wie Dimethylester oder Anhydride, und aliphatischen, cycloaliphatischen oder araliphatischen Diolen sowie Mischungen dieser Reaktionsprodukte.

Besonders bevorzugte aromatische Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten aromatischen Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C Atomen enthalten, wie z.B. Reste von Phthalsäure, Isophthalsäure, Naphthalin-2,6-dicarbonsäure, 4,4'-Diphenyldi-carbonsäure, Bernsteinsäure, Adipinsäure, Sebacinsäure, Azelainsäure, Cyclohexandiessigsäure.

Die bevorzugten aromatischen Polyalkylenterephthalate können neben Ethylenglykol bzw. Butandiol-1,4-Resten bis zu 20 mol-%, vorzugsweise bis zu 10 mol-%, andere aliphatische Diole mit 3 bis 12 C Atomen oder cycloaliphatische Diole mit 6 bis 21 C Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-($\beta$-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-$\beta$-hydroxyethoxy-phenyl)-propan und 2,2-Bis-(4-hydroxypropoxyphenyl)-propan (DE-A 2 407 674, 2 407 776, 2 715 932).

Die aromatischen Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind aromatische Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Die vorzugsweise verwendeten aromatischen Polyalkylenterephthalate besitzen eine Viskositätszahl von 0,4 bis 1,5 dl/g, vorzugsweise 0,5 bis 1,2 dl/g, gemessen in Phenol/o-Dichlorbenzol (1:1 Gewichtsteile) in einer Konzentration von 0,05g/ml gemäß ISO 307 bei 25°C im Ubbelohde-Viskosimeter.

Die aromatischen Polyalkylenterephthalate lassen sich nach bekannten Methoden herstellen (s. z.B. Kunststoff-Handbuch, Band VIII, S. 695 ff., Carl-Hanser-Verlag, München 1973).

Auch bevorzugt handelt es sich bei Komponente B um funktionelle Gruppen enthaltende Polyolefine.

Polyolefine werden durch Kettenpolymerisation, beispielsweise durch radikalische Polymerisation, hergestellt.

Als Monomere werden Alkene eingesetzt. Eine alternative Bezeichnung für Alkene ist Olefine. Die Monomere können einzeln oder als Mischung verschiedener Monomere polymerisiert werden.

Bevorzugte Monomere sind Ethylen, Propylen, 1-Buten, Isobuten, 1-Penten, 1-Hepten, 1-Okten und 4-Methyl-1-Penten.

Die Polyolefine sind können teilkristallin oder amorph sowie und linear oder verzweigt sein. Die Herstellung von Polyolefinen ist dem Fachmann seit langem bekannt.

Die Polymerisation kann beispielsweise bei Drücken von 1 bis 3000 bar und Temperaturen zwischen 20°C und 300°C durchgeführt werden, gegebenenfalls unter Einsatz eines Katalysatorsystems. Als Katalysatoren eignen sich beispielsweise Mischungen aus Titan- und Aluminiumverbindungen sowie Metallocene.

Durch Veränderung der Polymerisationsbedingungen und des Katalysatorsystems können die Anzahl der Verzeigungen, die Kristallinität und die Dichte der Polyolefine in weiten Bereichen variiert werden. Auch diese Maßnahmen sind dem Fachmann geläufig.

Funktionelle Gruppen werden in die Polyolefine eingebracht, indem wie oben beschrieben Vinylmonomere enthaltend die funktionelle Gruppe mit dem Olefin copolymerisiert werden, bevorzugt durch radikalische Polymerisation. Geeignete Vinylmonomere sind beispielsweise Glycidylmethacrylat und Methylmethcrylat.

Eine alternative Herstellungsmöglichkeit ist ausgehend von einem Polyolefin die radikalische Pfropfung von funktionelle Gruppen enthaltenden Vinylmonomeren.

Bei beiden Herstellungsverfahren können neben den funktionellen Gruppen enthaltenden Vinylmonomeren auch zusätzlich weitere Vinylmonomere ohne funktionelle Gruppen, wie etwa Styrol eingesetzt werden.

Die Polymere gemäß Komponente B haben mittlere Molekulargewichte (Gewichtsmittel $M_w$, gemessen durch GPC(Gelpermeationschromatographie) bei Raumtemperatur gegen Polystyrol als Standard) von bevorzugt mindestens 3000 g/mol, weiter bevorzugt von 5000 bis 200000 g/mol, besonders bevorzugt 10000 bis 100000 g/mol.

Das Lösungsmittel für die GPC Messung wird so ausgewählt, dass sich die Komponente B gut löst. Ein geeignetes Lösungsmittel für Vinylcopolymere wie Polymethylmethacrylat ist beispielsweise Tetrahydrofuran.

**Komponente C**

Als Komponente C wird ein Phosphonium-Salz gemäß Formel (4) eingesetzt

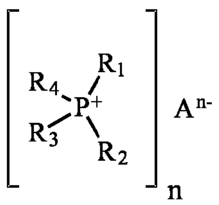

(4)

wobei

| | |
|---|---|
| $R_1$ und $R_2$ | jeweils unabhängig voneinander für $C_1$-$C_{10}$ Alkyl stehen,, |
| $R_3$ und $R_4$ | jeweils unabhängig voneinander für $C_1$-$C_{10}$-Alkyl oder $C_6$-$C_{12}$-Aryl stehen, |
| $A^-$ | für das Anion einer Carbonsäure steht und |
| n | für 1, 2 oder 3 steht. |

Bevorzugt stehen $R_1$ und $R_2$ in Formel (4) jeweils unabhängig voneinander für ein $C_1$-$C_4$ Alkyl, weiter bevorzugt steht mindestens $R_1$ oder $R_2$ für eine Butylgruppe, besonders bevorzugt stehen $R_1$ und $R_2$ für Butylgruppen.

In einer weiteren bevorzugten Ausführungsform sind die Alkylgruppen unverzweigt.

Am meisten bevorzugt stehen $R_1$ und $R_2$ jeweils für eine n-Butylgruppe.

Bevorzugt stehen $R_3$ und $R_4$ jeweils unabhängig voneinander für $C_1$-$C_{10}$ Alkyl.

In einer weiteren bevorzugten Ausführungsform steht mindestens $R_3$ oder $R_4$ für eine Butylgruppe, besonders bevorzugt stehen $R_3$ und $R_4$ für Butylgruppen.

In einer weiteren bevorzugten Ausführungsform sind die Alkylgruppen unverzweigt.

Am meisten bevorzugt stehen $R_3$ und $R_4$ jeweils für eine n-Butylgruppe.

In der am meisten bevorzugten Ausführungsform stehen $R_1$, $R_2$, $R_3$ und $R_4$ für n-Butylgruppen.

$A^{n-}$ steht für ein Carboxylat, also das Anion einer Monocarbonsäure (n=1), Dicarbonsäure (n=2) oder Tricarbonsäure (n=3).

Die Carbonsäure kann aliphatisch oder aromatisch sein. Bevorzugt ist die Carbonsäure aliphatisch.

Weiter bevorzugt ist die Carbonsäure ausgewählt aus Ameisensäure, Essigsäure, Prionsäure, Buttersäure,

Valeriansäure, Capronsäure, Bernsteinsäure, Oxalsäure, Malonsäure, Fumarsäure, Maleinsäure und Citronensäure.

Bevorzugt sind Monocarbonsäuren und Dicarbonsäuren, besonders bevorzugt sind Monocarbonsäuren.

Noch weiter bevorzugt handelt es sich bei der Carbonsäure um eine aliphatische, gesättigte Carbonsäure.

Besonders bevorzugt ist die Carbonsäure ausgewählt aus Malonsäure und Essigsäure und die Anionen sind damit Malonat oder Acetat. Am meisten bevorzugt ist Essigsäure.

Mit dem entsprechenden Acetat-Ion als Teil des Katalysators C werden die geringste Vergilbung und die niedrigste Trübung erreicht.

Am meisten bevorzugt handelt es sich bei der Komponente C um Tetrabutylphosphonium Acetat. Diese Komponente ist als CAS 30345-49-4 registriert und kommerziell erhältlich.

Es kann weiterhin vorteilhaft sein, wenn als $A^{n-}$ ein Acetat-Anion verwendet und der Katalysator C als Essigsäure-Komplex vorliegt.

Diese Komponente ist als CAS 34430-94-9 registriert und kommerziell erhältlich.

In dieser Form ist der Katalysator C bei Raumtemperatur ein Feststoff und lässt sich gut in dem erfindungsgemäßen Verfahren dosieren.

**Komponente D**

Als Komponente D können im erfindungsgemäßen Verfahren eine oder mehrere Polymeradditive sowie weitere polymere Komponenten verschieden von A und B eingesetzt werden, bevorzugt ausgewählt aus der Gruppe bestehend aus Flammschutzmitteln, Antidrippingmitteln, Flammschutzsynergisten, Rauchinhibitoren, Gleit- und Entformungsmitteln, Nukleiermitteln, polymere und nichtpolymere Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern, Schlagzähigkeitsmodifikatoren (sowohl mit als auch ohne Kern-Schale-Struktur), polymere Blendpartnern, Füll- und Verstärkungsstoffen sowie Farbstoffen und Pigmenten.

Wenn die Komponente D eingesetzt wird, so wird diese bevorzugt in einem Anteil von 0,1 bis 50 Gew.-% eingesetzt. Dieser Anteil ist dann die Summe aller als Komponente D eingesetzten Additive und polymeren Komponenten.

Dabei werden Antidrippingmittel, Flammschutzsynergisten, Rauchinhibitoren, Gleit- und Entformungsmittel, Nukleiermittel, nichtpolymere Antistatika, Leitfähigkeitsadditive und Stabilisatoren bevorzugt jeweils in einem Anteil von 0,1 bis 1 Gew.-% und in Summe bevorzugt in einem Anteil von 0,1 bis 3 Gew.-%, bezogen auf alle im Schritt a) des erfindungsgemäßen Verfahrens eingesetzten Komponenten verwendet.

Werden Flammschutzmittel verwendet, so werden davon bevorzugt 1 bis 20 Gew.-% eingesetzt, bezogen auf alle im Schritt a) des erfindungsgemäßen Verfahrens eingesetzten Komponenten.

Werden Fließfähigkeitspromotoren, polymere Antistatika und Phasenverträglichkeitsvermittler eingesetzt, so ist der verwendete Anteil jeweils bevorzugt 1 bis 10 Gew.-% und in Summe bevorzugt 1 bis 15 Gew.-%, bezogen auf alle im Schritt a) des erfindungsgemäßen Verfahrens eingesetzten Komponenten.

Werden Schlagzähmodifikatoren oder polymere Blendparter eingesetzt, so ist der verwendete Anteil in Summe bevorzugt 1 bis 50 Gew.-%, bezogen auf alle im Schritt a) des erfindungsgemäßen Verfahrens eingesetzten Komponenten.

Werden Farbstoffe oder Pigmente eingesetzt, so ist der verwendete Anteil bevorzugt 0,1 bis 10 Gew.-%, bezogen auf alle im Schritt a) des erfindungsgemäßen Verfahrens eingesetzten Komponenten.

Werden Füll-und Verstärkungsstoffe eingesetzt, so ist der verwendete Anteil bevorzugt 3 bis 30 Gew.-%, bezogen auf alle im Schritt a) des erfindungsgemäßen Verfahrens eingesetzten Komponenten.

In einer bevorzugten Ausführungsform werden keine Füll- und Verstärkungsstoffe eingesetzt.

In bevorzugter Ausführungsform wird mindestens ein Polymeradditiv ausgewählt aus der Gruppe bestehend aus Gleit- und Entformungsmitteln, Stabilisatoren, Fließfähigkeitspromotoren, Phasenverträglichkeitsvermittlern, Schlagzähigkeitsmodifikatoren, weiteren polymeren Blendpartner, Farbstoffen und Pigmenten eingesetzt.

In bevorzugter Ausführungsform wird als Entformungsmittel Pentaerythrittetrastearat eingesetzt.

In bevorzugter Ausführungsform wird als Stabilisator mindestens einen Vertreter ausgewählt aus der Gruppe bestehend aus sterisch gehinderten Phenolen, organischen Phosphiten und Schwefelbasierten Co-Stabilisatoren eingesetzt.

In besonders bevorzugter Ausführungsform wird als Stabilisator mindestens einen Vertreter ausgewählt aus der Gruppe bestehend aus Octadecyl-3-(3,5-di-tert-butyl-4-hydroxyphenyl)propionat und Tris(2,4-di-tert-butylphenyl)phosphit eingesetzt.

Aus den mit dem erfindungsgemäßen Verfahren hergestellten Zusammensetzungen können Formkörper aller Art hergestellt werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Nachfolgend werden weitere Ausführungsformen 1 bis 33 der vorliegenden Erfindung beschrieben:

1. Verfahren zur Herstellung einer thermoplastischen Formmasse enthaltend

A) mindestens ein aromatisches Polycarbonat und

B) ein weiteres Polymer, welches von Polymer A chemisch verschieden ist und welches mindestens eine Art funktioneller Gruppen ausgewählt aus Ester-, Epoxy-, Hydroxy-, Carboxy- und Carbonsäureanhydrid- Gruppen enthält,

umfassend die Schritte

a) Aufschmelzen und Durchmischen der Komponenten A und B in Anwesenheit eines Katalysators gemäß Komponente C bei einer Temperatur im Bereich von 200°C bis 350°C und

b) Verfestigen der Zusammensetzung durch Abkühlung der Zusammensetzung,

wobei die Komponente A ein mittleres Molekulargewicht $M_w$, gemessen durch Gelpermeationschromatographie bei Raumtemperatur in Methlylenchlorid mit Bisphenol A basiertem Polycarbonat als Standard, von mindestens 3000 g/mol aufweist,

dadurch gekennzeichnet dass,

im Verfahrensschritt a) zumindest ein Teil der Komponente A mit der Komponente B zu einem Copolymer umgesetzt wird

und wobei der Katalysator C ein Phosphonium-Salz gemäß Formel (4) ist

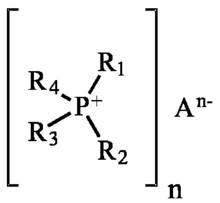

(4)

wobei

| | |
|---|---|
| $R_1$ und $R_2$ | jeweils unabhängig voneinander für $C_1$-$C_{10}$ Alkyl stehen, |
| $R_3$ und $R_4$ | jeweils unabhängig voneinander für $C_1$-$C_{10}$-Alkyl oder $C_6$-$C_{12}$-Aryl stehen, |
| $A^{n-}$ | für das Anion einer Carboxylsäure steht und |
| n | für 1, 2 oder 3 steht. |

2. Verfahren gemäß Ausführungsform 1, dadurch gekennzeichnet, dass die Komponente B ein Polymer ist, welches ausgewählt ist aus der Gruppe bestehend aus Vinyl(co)polymeren enthaltend Struktureinheiten abgeleitet von einem Alkylester der Acrylsäure, Vinyl(co)polymeren enthaltend Struktureinheiten abgeleitet von einem Alkylester eines Alkyl-substituierten Derivats der Acrylsäure, Epoxy-Gruppen enthaltenden Vinyl(co)polymeren und Epoxy-Gruppen enthaltenden Polyolefinen.

3. Verfahren gemäß einer der vorhergehenden Ausführungsformen, dadurch gekennzeichnet, dass die Mischung der Komponenten A und B einen Restfeuchtegehalt von 0,01 bis 0,50 Gew.-%, bezogen auf die Summe an A und

B aufweist.

4. Verfahren gemäß einer der vorhergehenden Ausführungsformen, dadurch gekennzeichnet, dass die Mischung der Komponenten A und B einen Restfeuchtegehalt von 0,07 bis 0,20 Gew.-%, bezogen auf die Summe an A und B aufweist.

5. Verfahren gemäß einer der vorhergehenden Ausführungsformen, dadurch gekennzeichnet, dass das aus der Umsetzung der Komponenten A und B erhaltene Copolymer ein Blockcopolymer oder ein Pfropfcopolymer ist, welches durch eine Epoxyringöffnungsadditionsreaktion oder einer Umesterungsreaktion bei der Umsetzung der Komponenten A und B entsteht.

6. Verfahren gemäß einer der vorhergehenden Ausführungsformen 2 bis 5, dadurch gekennzeichnet, dass das als Komponente B eingesetzte Vinyl(co)polymere ein (Co)Polymerisat von mindestens einem Monomeren aus der Gruppe der (Meth)Acrylsäure-(C1 bis C8)-Alkylester, ungesättigten Carbonsäuren und Carbonsäureanhydriden sowie weiterer Vinylmonomere enthaltend Ester-, Hydroxy-, Carboxy-, Carbonsäureanhydrid- und Epoxygruppen ist.

7. Verfahren gemäß Ausführungsform 6, dadurch gekennzeichnet, dass im Vinyl(co)polymerisat weiterhin Struktureinheiten abgeleitet von Vinylaromaten, Vinylcyaniden und Olefinen enthalten sind.

8. Verfahren gemäß einer der vorhergehenden Ausführungsformen 1 bis 6, dadurch gekennzeichnet, dass die Komponente B Polymethylmethacrylat ist.

9. Verfahren gemäß einer der vorhergehenden Ausführungsformen 1 bis 7, dadurch gekennzeichnet, dass die Komponente B ein Polymer ist, welches ausgewählt ist aus der Gruppe der Epoxy-Gruppen enthaltenden Vinyl(co)polymere.

10. Verfahren gemäß einer der vorhergehenden Ausführungsformen 1 bis 5, dadurch gekennzeichnet, dass die Komponente B ein Polymer ist, welches ausgewählt ist aus der Gruppe der Epoxy-Gruppen enthaltenden Polyolefine.

11. Verfahren gemäß einer der vorhergehenden Ausführungsformen, dadurch gekennzeichnet, dass die Komponente A ein aromatisches Polycarbonat auf Basis von Bisphenol A ist.

12. Verfahren gemäß einer der vorhergehenden Ausführungsformen, dadurch gekennzeichnet, dass die Komponente A ein gewichtsgemitteltes Molekulargewicht $M_w$, gemessen durch Gelpermeationschromatographie bei Raumtemperatur in Methlylenchlorid mit Polycarbonatstandard auf Basis Bisphenol A von höchstens 50000 g/mol aufweist.

13. Verfahren gemäß einer der vorhergehenden Ausführungsformen, dadurch gekennzeichnet, dass die Komponente A ein gewichtsgemitteltes Molekulargewicht $M_w$, gemessen durch Gelpermeationschromatographie bei Raumtemperatur in Methlylenchlorid mit Polycarbonatstandard auf Basis Bisphenol A von 20000 bis 33000 g/mol aufweist.

14. Verfahren gemäß einer der vorhergehenden Ausführungsformen, dadurch gekennzeichnet, dass im Schritt a)

0,5 bis 99 Gew.-% der Komponente A,
0,5 bis 99 Gew.-% der Komponente B und
0,01 bis 0,5 Gew.-% der Komponente C

eingesetzt werden.

15. Verfahren gemäß einer der vorhergehenden Ausführungsformen, dadurch gekennzeichnet, dass im Schritt a)

10 bis 89,5 Gew.-% der Komponente A,
10 bis 89,5 Gew.-% der Komponente B und
0,02 bis 0,25 Gew.-% der Komponente C

eingesetzt werden.

16. Verfahren gemäß einer der vorhergehenden Ausführungsformen, dadurch gekennzeichnet, dass im Schritt a)

30 bis 84,5 Gew.-% der Komponente A,
15 bis 69,5 Gew.-% der Komponente B und
0,03 bis 0,1 Gew.-% der Komponente C

eingesetzt werden.

17. Verfahren gemäß einer der vorhergehenden Ausführungsformen, dadurch gekennzeichnet, dass im Schritt a) weiterhin als Komponente D Polymeradditive und/oder weitere polymere Blendpartner verschieden von den Komponenten A und B zugegeben werden.

18. Verfahren gemäß Ausführungsform 17, dadurch gekennzeichnet, dass im Schritt a) 0,1 bis 50 Gew.-% der Komponente D eingesetzt werden.

19. Verfahren gemäß Ausführungsform 17, dadurch gekennzeichnet, dass im Schritt a) 0,3 bis 30 Gew.-% der Komponente D eingesetzt werden.

20. Verfahren gemäß Ausführungsform 17, dadurch gekennzeichnet, dass im Schritt a) 0,4 bis 20 Gew.-% der Komponente D eingesetzt werden.

21. Verfahren gemäß einer der vorhergehenden Ausführungsformen, dadurch gekennzeichnet, dass Verfahrensschritt a) in einem kontinuierlichen Doppelwellenextruder mit einer Verweilzeit im Bereich von 10 Sekunden bis 2 Minuten durchgeführt wird.

22. Verfahren gemäß einer der vorhergehenden Ausführungsformen, dadurch gekennzeichnet, dass Verfahrensschritt a) in einem kontinuierlichen Doppelwellenextruder mit einer Verweilzeit im Bereich von 15 Sekunden bis 1 Minute durchgeführt wird.

23. Verfahren gemäß einer der vorhergehenden Ausführungsformen 1 bis 7 und 9 bis 22, dadurch gekennzeichnet, dass es sich beim Polymer B um ein Epoxy-Gruppen enthaltendes Vinyl(co)polymer oder ein Epoxy-Gruppen enthaltendes Polyolefin handelt und im Verfahrensschritt a) mindestens 5 Mol.-% der Epoxygruppen im Polymer B umgesetzt werden.

24. Verfahren gemäß einer der vorhergehenden Ausführungsformen 1 bis 7 und 9 bis 22, dadurch gekennzeichnet, dass es sich beim Polymer B um ein Epoxy-Gruppen enthaltendes Vinyl(co)polymer oder ein Epoxy-Gruppen enthaltendes Polyolefin handelt und im Verfahrensschritt a) mindestens 15 Mol.-% der Epoxygruppen im Polymer B umgesetzt werden.

25. Verfahren gemäß einer der vorhergehenden Ausführungsformen, dadurch gekennzeichnet, dass bei dem Katalysator C $R_1$ und/oder $R_2$ für eine n-Butylgruppe stehen.

26. Verfahren gemäß einer der vorhergehenden Ausführungsformen, dadurch gekennzeichnet, dass bei dem Katalysator C $A^{n-}$ für ein Acetat-Ion oder Malonat-Ion steht.

27. Verfahren gemäß einer der vorhergehenden Ausführungsformen, dadurch gekennzeichnet, dass der Katalysator C Tetra-n-Butylphosphoniumacetat in Form des Essigsäure-Komplexes ist.

28. Verfahren gemäß einer der vorhergehenden Ausführungsformen, dadurch gekennzeichnet, dass das Verfahren in einem Temperaturbereich von 220 bis 300°C stattfindet.

29. Verfahren gemäß einer der vorhergehenden Ausführungsformen, dadurch gekennzeichnet, dass das Verfahren in einem Temperaturbereich von 230 bis 270°C stattfindet.

30. Verfahren gemäß einer der vorhergehenden Ausführungsformen, dadurch gekennzeichnet, dass der Katalysator im Schritt a) oder nach Schritt a) deaktiviert oder entfernt wird.

31. Verfahren gemäß einer der vorhergehenden Ausführungsformen, dadurch gekennzeichnet, dass nach Schritt a) ein Entgasen der vorliegenden Zusammensetzung durch Anlegen eines Unterdrucks erfolgt.

32. Thermoplastische Formmasse hergestellt mit einem Verfahren gemäß einer der vorhergehenden Ausführungsformen 1 bis 31.

33. Formkörper enthaltend eine thermoplastische Formmasse gemäß Ausführungsform 32.

## Beispiele

### Zusammensetzungen und darin verwendete Komponenten

Komponente A1

Makrolon™ M2408 (Covestro Deutschland AG, Leverkusen)
Aromatisches Polycarbonat auf Basis von Bisphenol-A

Komponente A2

Makrolon™ M2606 (Covestro Deutschland AG, Leverkusen)
Aromatisches Polycarbonat auf Basis von Bisphenol-A

Komponente B1

Plexiglas™ 8H (Evonik Performance Materials GmbH, Darmstadt)
Polymethylmethacrylat

Komponente B2

Fine-Blend™ SAG-008 (Fine-blend Compatilizer Jiangsu Co., LTD, Shanghai, China)
Statistisches Styrol-Acrylnitril-Glycidylmethacrylat-Terpolymer. Der Epoxid-Gehalt bestimmt gemäß DIN EN 1877-1 (Version von 2000) beträgt 2,35 Gew.-%.

Komponente C1

Zinnchlorid-Dihydrat ≥98 % (Sigma-Aldrich)

Komponente C2

Zinkacetat 99,99 % (Sigma-Aldrich)

Komponente C3

Tetrabutylphosphoniumacetat-Essigsäurekomplex (Sachem Inc., Austin, USA)

Komponente C4

Tetrabutylammoniumacetat-Essigsäurekomplex
Sachem N-416 (Sachem Inc., Austin, USA)

Komponente C5

Tetrabutylphosphoniummalonat ≥92 % (Sigma-Aldrich)

Komponente C6

Tetrabutylphosphonium-p-toluolsulfonate ≥95 % (Sigma-Aldrich)

**Herstellung der thermoplastischen Formmassen und Formkörper**

Die PC/PMMA-Formmassen V1, V2, V3, 4, 5, V6, 7 und V8 gemäß Tabelle 1 sowie die PMMA/PC-Formmassen V11 bis V13 und 14 gemäß Tabelle 3 wurden auf einem ZSK26 MC18-Doppelwellenextruder der Fa. Coperion GmbH (Stuttgart, Deutschland) bei einer Schmelzetemperatur am Düsenaustritt von etwa 260°C hergestellt. Es wurde ein Unterdruck von 100 mbar (absolut) angelegt. Die Verweilzeit der Schmelzemischung im Extruder betrug etwa 30 s.

Die Formmassen V9 und 10 aus Polycarbonat und Styrol-Acrylnitril-Glycidylmethacrylat-Terpolymer gemäß Tabelle 2 wurden auf einem Process 11-Doppelwellenextruder der Fa. Thermo Fisher Scientific Inc. (Karlsruhe, Deutschland) bei einer Schmelzetemperatur am Düsenaustritt von etwa 260°C hergestellt. Es wurde kein Unterdruck dabei angelegt. Die Verweilzeit der Schmelzemischung im Extruder betrug etwa 60 s.

Die Formkörper für die Prüfungen wurden bei 260°C Massetemperatur und bei einer Werkzeugtemperatur von 80°C auf einer Spritzgießmaschine Typ Arburg 270 E hergestellt.

**Bestimmung des Restfeuchtegehaltes von A und B**

Der Restfeuchtegehalt (in dieser Anmeldung synonym auch als Wassergehalt bezeichnet) von A und B bezogen auf A+B wurde über Karl-Fischer-Titration gemäß DIN 51777 (Version von 2014) der optional vorgetrockenten Komponenten A und B bestimmt und aus den so bestimmten Restfeuchtewerten der Komponenten A und B berechnet gemäß:

Wassergehalt von A und B (bezogen auf A+B)

= (Restfeuchtegehalt von A x Masse-Anteil von A + Restfeuchtegehalt von B x Masse-Anteil von B) / (Masse-Anteil von A + Masse-Anteil von B)

**Bestimmung des Umsatzes der Epoxy-Funktionalitäten**

Der Umsatz der Epoxy-Funktionalitäten im Polymer B2 bei der Reaktivcompoundierung mit Komponente A2 wurde über eine titrimetrische Bestimmung des Epoxid-Gehaltes in der Komponente B2 sowie in den daraus durch Reaktivcompoundierung mit Komponente A2 in An- bzw. Abwesenheit eines erfindungsgemäßen Katalysators hergestellten thermoplastischen Formmassen gemäß DIN EN 1877-1 (Version von 2000) ermittelt. Die Proben wurden für die Titration in einer Mischung aus Dichlormethan und Essigsäure im Mischungsverhältnis von 40 ml zu 25 ml bei Raumtemperatur gelöst.

**Ausprüfung der Formmassen**

Der E-Modul wurde gemäß ISO 527 (Version von 1996) bei Raumtemperatur bestimmt.

Der Gelb- und Trübungswert wurde bestimmt an Farbmusterplättchen mit den Abmessungen 60 mm x 40 mm x 2 mm gemäß DIN 6174 (Version von 2007) bzw. ASTM D 1003 (Version von 2013).

**Nachweis der Copolymerbildung bei der Reaktivcompoundierung von PC mit PMMA**

Es wurden 5 g des im beschriebenen Compoundierungsverfahren hergestellten Granulats der jeweiligen zu untersuchenden thermoplastischen PC/PMMA-Formmasse in 100 mL Aceton in einem Rundkolben für 24 h bei Raumtemperatur (ca. 25 °C) unter Rühren extrahiert. Anschließend wurde der in Aceton unlösliche Anteil der PC/PMMA-Formmasse von dem Aceton mit dem darin enthaltenen extrahierten, das heißt in Aceton löslichen Anteil der PC/PMMA-Formmasse mittel Filtration getrennt. Der Filtrationsrückstand (in Aceton unlöslicher Anteil der Formmasse) wurde im Filtrationstrichter einmal mit Aceton nachgewaschen. Anschließend wurde der unlösliche Anteil der PC/PMMA-Formmasse in einem Umluftofen bei 60°C getrocknet. Für die Rückgewinnung des in Aceton löslichen Anteils der PC/PMMA-Formmasse wurde das Aceton aus dem Filtrat mittels eines Rotationsverdampfers abdestilliert.

Die so erhaltenen in Aceton löslichen und unlöslichen Anteile der PC/PMMA-Formmassen wurden anschließend mittel FTIR-Infrarotspektroskopie unter Verwendung eines FT-IR-Spektrometers Nicolet Nexus 470 mit ATR-(attenuated total reflection = abgeschwächte Totalreflexion)-Messtechnik der Fa. ThermoFisher Scientific (Karlsruhe, Deutschland) im Messbereich von 600 bis 4000 cm-1 mit einer Auflösung von 1 $cm^{-1}$ vermessen. Dabei dient die CO-Doppelbindungsschwingung zum analytischen Nachweis und zur Differenzierung von Polycarbonat und PMMA. Diese selektive Schwingung wird für Polycarbonat in einem Wellenzahlbereich um 1775 $cm^{-1}$ und für PMMA in einem Wellenzahlbereich um 1725 $cm^{-1}$ beobachtet.

## Untersuchung der Polymerverträglichkeit durch Transmissionselektronenmikroskopie

Die Polymerverträglichkeit der Komponenten A und B in den Formmassen aus Polycarbonat und Styrol-Acrylnitril-Glycidylmethacrylat wurde mittels Transmissionselektronenmikroskopie (TEM) untersucht. Hierzu wurden von einem Granulatkorn der im beschriebenen Compoundierungsverfahren hergestellten Formmassen mit einem Ultramikrotom EM UC7 der Firma Leica Microsystems GmbH (Wetzlar, Deutschland) Ultradünnschnitte hergestellt. Die Ultradünnschnitte wurden mit einem Diamantmesser angefertigt und in einem Dimethylsulfoxid/Wasser-Gemisch bei -30°C aufgefangen. Die Ultradünnschnitte wurden zur TEM-Untersuchung auf ein mit Kohle beschichteten Kupfergrid gelegt und mit Rutheniumtetraoxid ($RuO_4$) kontrastiert. Die $RuO_4$-Kontrastierung erfolgte durch eine in-situ Reaktion, bei welcher 1 ml Natriumhypochloritlösung auf 13 mg Ruthenium(III)-chlorid ($RuCl_3$) gegeben wurden. Dabei entsteht $RuO_4$-Dampf, in welchem die Grids mit den Ultradünnschitten für 15 min gelagert wurden. Die TEM-Aufnahmen wurden im Hellfeld bei einer Beschleunigungsspannung von 200 kV mit einem LEO 922A EFTEM-Transmissionselektronenmikroskop der Firma Carl Zeiss Microscopy GmbH (Jena, Deutschland) angefertigt.

## Beschreibung der Abbildungen

### Abbildung 1

FTIR-Spektren (E bezeichnet die Extinktion und v die Wellenzahl)

1: Komponente A1
2: Komponente B1
3: in Aceton unlöslicher Anteil von Formmasse V1
4: in Aceton löslicher Anteil von Formmasse V1
5: in Aceton unlöslicher Anteil von Formmasse 4
6: in Aceton löslicher Anteil von Formmasse 4

### Abbildung 2

FTIR-Spektren (E bezeichnet die Extinktion und v die Wellenzahl)

1: in Aceton unlöslicher Anteil von Formmasse 5
2: in Aceton unlöslicher Anteil von Formmasse 4

### Abbildung 3

TEM-Aufnahme an einem Mikrotomschnitt eines Granulatkorns aus Formmasse V9

### Abbildung 4

TEM-Aufnahme an einem Mikrotomschnitt eines Granulatkorns aus Formmasse 10

**Tabelle 1:** PC/PMMA-Formmassen und ihre Eigenschaften

| **Beispiel** | **V1** | **V2** | **V3** | **4** | **5** | **V6** | **7** | **V8** |
|---|---|---|---|---|---|---|---|---|
| **Zusammensetzung** | **Gew.-Teile** | **Gew.-Teile** | **Gew.-Teile** | **Gew.-Teile** | **Gew.-Teile** | **Gew.-Teile** | **Gew.-Teile** | **Gew.-Teile** |
| A1 | 50 | 50 | 50 | 50 | 50 | 50 | 50 | 50 |
| B1 | 50 | 50 | 50 | 50 | 50 | 50 | 50 | 50 |
| C1 | | 0,05 | | | | | | |
| C2 | | | 0,05 | | | | | |
| C3 | | | | 0,05 | 0,05 | | | |
| C4 | | | | | | 0,05 | | |
| C5 | | | | | | | 0,05 | |
| C6 | | | | | | | | 0,05 |
| **Wassergehalt A+B** [Gew.-% bezogen auf A+B] | 0,105 | 0,105 | 0,105 | 0,105 | 0,060 | 0,105 | 0,105 | 0,105 |
| **Eigenschaften** | | | | | | | | |
| E-Modul [MPa] | 2748 | 2875 | 2799 | 2838 | 2809 | 2741 | 2831 | 2779 |
| Gelbwert | 39,7 | 8,2 | 48,4 | 1,8 | 4,7 | 46,0 | 2,1 | 38,9 |
| Trübung | 99,4 | 11,4 | 98,7 | 0,5 | 7,9 | 98,4 | 2,3 | 99,3 |

Die Daten in Tabelle 1 zeigen, dass mit den erfindungsgemäßen Katalysatoren C3 und C5 niedrigere Gelbwerte und höhere Transparenzen (niedrigere Trübung) erzielt werden als mit den im Stand der Technik beschriebenen Katalysatoren C1 und C2 beziehungsweise als mit den zu den erfindungsgemäßen Katalysatoren strukturanalogen, aber nicht erfindungsgemäßen Katalysatoren C4 und C6. Ohne Katalysator (Vergleichsbeispiel V1) wird keine Transparenz realisiert. Mit den erfindungsgemäßen Katalysatoren werden auch höhere E-Moduli erzielt als ohne Katalysator, so dass auch von einer höheren Oberflächenhärte und somit Kratzfestigkeit ausgegangen werden kann.

Die FTIR-Untersuchungen in Abbildungen 1 und 2 belegen, dass bei der Reaktivcompoundierung der erfindungsgemäßen Formmassen 4 und 5 PC-PMMA-Copolymere durch Reaktion der Komponente A1 mit der Komponente B1 entstanden sind, wobei Abbildung 2 weiterhin belegt, dass in der Formmasse 4, die mit dem bevorzugten höheren Wassergehalt in der Mischung aus Komponenten A1 und B1 hergestellt wurde, eine größere Menge an diesen PC-PMMA-Copolymeren entstanden ist.

Ein Vergleich der Eigenschaften der erfindungsgemäßen Formmassen 4 und 5 gemäß Tabelle 1 zeigt, dass es bei Einsatz der erfindungsgemäßen Katalysatoren im Hinblick auf eine Optimierung von Transparenz, Gelbwert und E-Modul vorteilhaft ist, wenn die polymeren Komponenten A und B eine Mindestmenge an Feuchtigkeit enthalten.

**Tabelle 2:** PC/Styrol-Acrylnitril-Glycidylmethacrylat-Zusammensetzungen

| **Beispiel** | **V9** | **10** |
|---|---|---|
| **Zusammensetzung** | **Gew.-Teile** | **Gew.-Teile** |
| A2 | 80 | 80 |
| B2 | 20 | 20 |
| C3 | | 0,05 |
| **Wassergehalt A+B** [Gew.-% bezogen auf A+B] | 0,044 | 0,044 |
| **Eigenschaften** | | |
| Epoxid-Gehalt [Gew.-%] | 0,46 | 0,39 |
| Epoxid-Umsatz (berechnet) [%] | 2 | 17 |

Die Daten in Tabelle 2 zeigen, dass in dem erfindungsgemäßen Verfahren in Anwesenheit des erfindungsgemäßen Katalysators eine Umsetzung des Epoxids von 15% in einem Doppelwellenextruder mit einer Verweilzeit von ca. 60 s erzielt werden kann, während eine solche Umsetzung in einem Verfahren gemäß dem Stand der Technik ohne einen solchen Katalysator nicht stattfindet. Ein Vergleich der Abbildungen 3 und 4 zeigt weiterhin, dass durch diese Umsetzung des Epoxids eine deutlich feinere Phasendispergierung des Styrol-Acrylnitril-Glycidylmethacrylat-Terpolymers gemäß Komponente B in Polycarbonat gemäß Komponente A erzielt werden kann.

**Tabelle 3:** PMMA/PC-Formmassen und ihre Eigenschaften

| **Beispiel** | **V11** | **V12** | **V13** | **14** |
|---|---|---|---|---|
| **Zusammensetzung** | **Gew.-Teile** | **Gew.-Teile** | **Gew.-Teile** | **Gew.-Teile** |
| A1 | 20 | 20 | 20 | 20 |
| B1 | 80 | 80 | 80 | 80 |
| C1 | | 0,3 | | |
| C2 | | | 0,3 | |
| C3 | | | | 0,3 |
| **Wassergehalt A+B** [Gew.-% bezogen auf A+B] | 0,090 | 0,090 | 0,090 | 0,090 |
| **Eigenschaften** | | | | |
| E-Modul [MPa] | 3087 | 3124 | 3084 | 3210 |
| Gelbwert | 48,01 | 15,4 | 16,9 | 4,5 |
| Trübung | 98,26 | 44,2 | 11,8 | 0,5 |

Die Beispiele in Tabelle 3 zeigen, dass die erfindungsgemäße PMMA/PC-Formmasse 14, welche mit einem erfindungsgemäßen Katalysator hergestellt wurde, besser Transparenz (geringere Trübung), eine geringere Eigenfarbe (geringer Gelbwert) und einen höheren E-Modul aufweist.

## Patentansprüche

1. Verfahren zur Herstellung einer thermoplastischen Formmasse enthaltend

   A) mindestens ein aromatisches Polycarbonat und
   B) ein weiteres Polymer, welches von Polymer A chemisch verschieden ist und welches mindestens eine Art funktioneller Gruppen ausgewählt aus Ester-, Epoxy-, Hydroxy-, Carboxy- und Carbonsäureanhydrid- Gruppen enthält,
   umfassend die Schritte

      a) Aufschmelzen und Durchmischen der Komponenten A und B in Anwesenheit eines Katalysators gemäß Komponente C bei einer Temperatur im Bereich von 200°C bis 350°C und
      b) Verfestigen der Zusammensetzung durch Abkühlung der Zusammensetzung,

   wobei die Komponente A ein mittleres Molekulargewicht $M_w$, gemessen durch Gelpermeationschromatographie bei Raumtemperatur in Methlylenchlorid mit auf Bisphenol A basiertem Polycarbonat als Standard, von mindestens 3000 g/mol aufweist,
   **dadurch gekennzeichnet dass**,
   im Verfahrensschritt a) zumindest ein Teil der Komponente A mit der Komponente B zu einem Copolymer umgesetzt wird
   und wobei der Katalysator C ein Phosphonium-Salz gemäß Formel (4) ist

   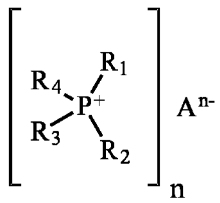 (4)

   wobei

      $R_1$ und $R_2$ jeweils unabhängig voneinander für $C_1$-$C_{10}$ Alkyl stehen,
      $R_3$ und $R_4$ jeweils unabhängig voneinander für $C_1$-$C_{10}$-Alkyl oder $C_6$-$C_{12}$-Aryl stehen,
      $A^{n-}$ für das Anion einer Carboxylsäure steht und
      n für 1, 2 oder 3 steht.

2. Verfahren gemäß Anspruch 1, **dadurch gekennzeichnet, dass** die Komponente B ein Polymer ist, welches ausgewählt ist aus der Gruppe bestehend aus Vinyl(co)polymeren enthaltend Struktureinheiten abgeleitet von einem Alkylester der Acrylsäure, Vinyl(co)polymeren enthaltend Struktureinheiten abgeleitet von einem Alkylester eines Alkyl-substituierten Derivats der Acrylsäure, Epoxy-Gruppen enthaltenden Vinyl(co)polymeren und Epoxy-Gruppen enthaltenden Polyolefinen.

3. Verfahren gemäß einem der vorhergehenden Ansprüche, **dadurch gekennzeichnet, dass** die Mischung der Komponenten A und B einen Restfeuchtegehalt von 0,01 bis 0,50 Gew.-%, bezogen auf die Summe an A und B aufweist.

4. Verfahren gemäß einem der vorhergehenden Ansprüche, **dadurch gekennzeichnet, dass** die Komponente B Polymethylmethacrylat ist.

5. Verfahren gemäß einem der Ansprüche 1 bis 3, **dadurch gekennzeichnet, dass** die Komponente B ein Polymer ist, welches ausgewählt ist aus der Gruppe bestehend aus Epoxy-Gruppen enthaltenden Vinyl(co)polymeren und Epoxy-Gruppen enthaltenden Polyolefinen

6. Verfahren gemäß einem der vorhergehenden Ansprüche, **dadurch gekennzeichnet, dass** die Komponente A ein aromatisches Polycarbonat auf Basis von Bisphenol A ist.

7. Verfahren gemäß einem der vorhergehenden Ansprüche, **dadurch gekennzeichnet, dass** im Schritt a) weiterhin als Komponente D Polymeradditive und/oder weitere polymere Blendpartner verschieden von den Komponenten A und B zugegeben werden.

8. Verfahren gemäß einem der vorhergehenden Ansprüche, **dadurch gekennzeichnet, dass** im Schritt a)

   0,5 bis 99 Gew.-% der Komponente A,
   0,5 bis 99 Gew.-% der Komponenten B,
   0,01 bis 0,5 Gew.-% der Komponente C und
   0,1 bis 50 Gew.-% der Komponente D

   eingesetzt werden.

9. Verfahren gemäß einem der vorhergehenden Ansprüche, **dadurch gekennzeichnet, dass** Verfahrensschritt a) in einem kontinuierlichen Doppelwellenextruder mit einer Verweilzeit im Bereich von 15 Sekunden bis 1 Minute durchgeführt wird.

10. Verfahren gemäß einem der vorhergehenden Ansprüche 1 bis 3 und 5 bis 9, **dadurch gekennzeichnet, dass** es sich beim Polymer B um ein Epoxy-Gruppen enthaltendes Vinyl(co)polymer oder ein Epoxy-Gruppen enthaltendes Polyolefin handelt und im Verfahrensschritt a) mindestens 5 Mol.-% der Epoxygruppen im Polymer B umgesetzt werden.

11. Verfahren gemäß einem der vorhergehenden Ansprüche, **dadurch gekennzeichnet, dass** bei dem Katalysator C $R_1$ und/oder $R_2$ für eine n-Butylgruppe stehen.

12. Verfahren gemäß einem der vorhergehenden Ansprüche, **dadurch gekennzeichnet, dass** bei dem Katalysator C $A^{n-}$ für ein Acetat-Ion oder Malonat-Ion steht.

13. Verfahren gemäß einem der vorhergehenden Ansprüche, **dadurch gekennzeichnet, dass** der Katalysator C Tetra-n-Butylphosphoniumacetat in Form des Essigsäure-Komplexes ist.

14. Thermoplastische Formmasse hergestellt mit einem Verfahren gemäß einem der vorhergehenden Ansprüche 1 bis 13.

15. Formkörper enthaltend eine thermoplastische Formmasse gemäß Anspruch 14.

## Claims

1. Process for producing a thermoplastic molding material containing

   A) at least one aromatic polycarbonate and
   B) a further polymer which is chemically distinct from polymer A and which contains at least one type of functional group selected from ester, epoxy, hydroxyl, carboxyl and carboxylic anhydride groups,
   comprising the steps of

      a) melting and commixing the components A and B in the presence of a catalyst of component C at a temperature in the range from 200°C to 350°C and
      b) solidifying the composition by cooling the composition,

   wherein the component A has an average molecular weight $M_w$ measured by gel permeation chromatography at room temperature in methylene chloride with a bisphenol Abased polycarbonate standard of at least 3000 g/mol,
   **characterized in that**
   in process step a) at least a portion of the component A is reacted with the component B to afford a copolymer

and wherein the catalyst C is a phosphonium salt according to formula (4)

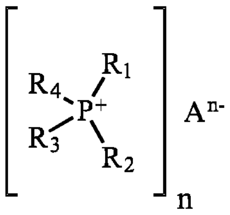

(4)

wherein

$R_1$ and $R_2$ each independently of one another represent $C_1$-$C_{10}$ alkyl,
$R_3$ and $R_4$ each independently of one another represent $C_1$-$C_{10}$-alkyl or $C_6$-$C_{12}$-aryl,
$A^{n-}$ represents the anion of a carboxylic acid and
n represents 1, 2 or 3.

2. Process according to Claim 1, **characterized in that** the component B is a polymer which is selected from the group consisting of vinyl (co)polymers containing structural units derived from an alkyl ester of acrylic acid, vinyl (co)polymers containing structural units derived from an alkyl ester of an alkyl-substituted derivative of acrylic acid, epoxy-containing vinyl (co)polymers and epoxy-containing polyolefins.

3. Process according to either of the preceding claims, **characterized in that** the mixture of the components A and B has a residual moisture content of 0.01% to 0.50% by weight based on the sum of A and B.

4. Process according to any of the preceding claims, **characterized in that** the component B is polymethyl methacrylate.

5. Process according to any of Claims 1 to 3, **characterized in that** the component B is a polymer which is selected from the group consisting of epoxy-containing vinyl (co)polymers and epoxy-containing polyolefins.

6. Process according to any of the preceding claims, **characterized in that** the component A is an aromatic polycarbonate based on bisphenol A.

7. Process according to any of the preceding claims, **characterized in that** polymer additives and/or further polymeric blend partners distinct from the components A and B are further added as component D in step a).

8. Process according to any of the preceding claims, **characterized in that** in step a)

0.5% to 99% by weight of the component A,
0.5% to 99% by weight of the components B,
0.01% to 0.5% by weight of the component C and
0.1% to 50% by weight of the component D

are employed.

9. Process according to any of the preceding claims, **characterized in that** process step a) is performed in a continuous twin-screw extruder with a residence time in the range from 15 seconds to 1 minute.

10. Process according to any of the preceding Claims 1 to 3 and 5 to 9, **characterized in that** the polymer B is an epoxy-containing vinyl (co)polymer or an epoxy-containing polyolefin and in process step a) at least 5 mol% of the epoxy groups in polymer B are converted.

11. Process according to any of the preceding claims, **characterized in that** in the catalyst C $R_1$ and/or $R_2$ represent an n-butyl group.

12. Process according to any of the preceding claims, **characterized in that** in the catalyst C $A^{n-}$ represents an acetate ion or malonate ion.

**13.** Process according to any of the preceding claims, **characterized in that** the catalyst C is tetra-n-butylphosphonium acetate in the form of the acetic acid complex.

**14.** Thermoplastic molding material produced with a process according to any of the preceding Claims 1 to 13.

**15.** Molded article containing a thermoplastic molding material according to Claim 14.

**Revendications**

**1.** Procédé pour la préparation d'une matière à mouler thermoplastique contenant

A) au moins un polycarbonate aromatique et
B) un autre polymère, qui est chimiquement différent du polymère A et qui contient au moins un type de groupes fonctionnels choisis parmi les groupes ester, époxy, hydroxy, carboxy et anhydride d'acide carboxylique,

comprenant les étapes

a) fusion et mélange des composants A et B en présence d'un catalyseur selon le composant C à une température dans la plage de 200 °C à 350 °C et
b) solidification de la composition par refroidissement de la composition,
le composant A présentant une masse moléculaire moyenne $M_w$, mesurée par chromatographie par perméation de gel à la température ambiante dans du chlorure de méthylène avec du polycarbonate à base de bisphénol A en tant qu'étalon, d'au moins 3 000 g/mole,
**caractérisé en ce que**
dans l'étape a) du procédé on fait réagir au moins une partie du composant A avec le composant B pour aboutir à un copolymère
et le catalyseur C étant un sel de phosphonium selon la formule (4)

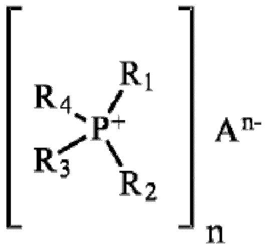 (4)

dans laquelle

$R_1$ et $R_2$ représentent chacun indépendamment l'un de l'autre un groupe alkyle en $C_1$-$C_{10}$,
$R_3$ et $R_4$ représentent chacun indépendamment l'un de l'autre un groupe alkyle en $C_1$-$C_{10}$ ou aryle en $C_6$-$C_{12}$, $A^{n-}$ représente l'anion d'un acide carboxylique et
n représente 1, 2 ou 3.

**2.** Procédé selon la revendication 1, **caractérisé en ce que** le composant B est un polymère qui est choisi dans le groupe constitué par les (co)polymères vinyliques contenant des motifs structuraux dérivés d'un ester alkylique de l'acide acrylique, les (co)polymères vinyliques contenant des motifs structuraux dérivés d'un ester alkylique d'un dérivé substitué par alkyle de l'acide acrylique, les (co)polymères vinyliques contenant des groupes époxy et les polyoléfines contenant des groupes époxy.

**3.** Procédé selon l'une quelconque des revendications précédentes, **caractérisé en ce que** le mélange des composants A et B présente une teneur en humidité résiduelle de 0,01 à 0,50 % en poids, par rapport à la somme de A et B.

**4.** Procédé selon l'une quelconque des revendications précédentes, **caractérisé en ce que** le composant B est le poly(méthacrylate de méthyle).

**5.** Procédé selon l'une quelconque des revendications 1 à 3, **caractérisé en ce que** le composant B est un polymère

qui est choisi dans le groupe constitué par les (co)polymères vinyliques contenant des groupes époxy et les polyoléfines contenant des groupes époxy.

**6.** Procédé selon l'une quelconque des revendications précédentes, **caractérisé en ce que** le composant A est un polycarbonate aromatique à base de bisphénol A.

**7.** Procédé selon l'une quelconque des revendications précédentes, **caractérisé en ce que** dans l'étape a) on ajoute en outre en tant que composant D des additifs pour polymères et/ou d'autres partenaires de mélange polymères différents des composants A et B.

**8.** Procédé selon l'une quelconque des revendications précédentes, **caractérisé en ce que** dans l'étape a) on utilise

0,5 à 99 % en poids du composant A,
0,5 à 99 % en poids du composant B,
0,01 à 0,5 % en poids du composant C et
0,1 à 50 % en poids du composant D.

**9.** Procédé selon l'une quelconque des revendications précédentes, **caractérisé en ce que** l'étape a) du procédé est effectuée dans une extrudeuse double vis continue avec un temps de séjour dans l'intervalle de 15 secondes à 1 minute.

**10.** Procédé selon l'une quelconque des revendications 1 à 3 et 5 à 9, **caractérisé en ce que** pour ce qui est du polymère B il s'agit d'un (co)polymère vinylique contenant des groupes époxy ou d'une polyoléfine contenant des groupes époxy et dans l'étape a) du procédé au moins 5 % en moles des groupes époxy dans le polymère B sont mis en réaction.

**11.** Procédé selon l'une quelconque des revendications précédentes, **caractérisé en ce que** dans le catalyseur C $R_1$ et/ou $R_2$ représentent un groupe n-butyle.

**12.** Procédé selon l'une quelconque des revendications précédentes, **caractérisé en ce que** dans le catalyseur C $A^{n-}$ représente un ion acétate ou ion malonate.

**13.** Procédé selon l'une quelconque des revendications précédentes, **caractérisé en ce que** le catalyseur C est l'acétate de tétra-n-butylphosphonium sous forme du complexe d'acide acétique.

**14.** Matière à mouler thermoplastique produite par un procédé selon l'une quelconque des revendications précédentes 1 à 13.

**15.** Corps moulé contenant une matière à mouler thermoplastique selon la revendication 14.

**Abbildung 1**

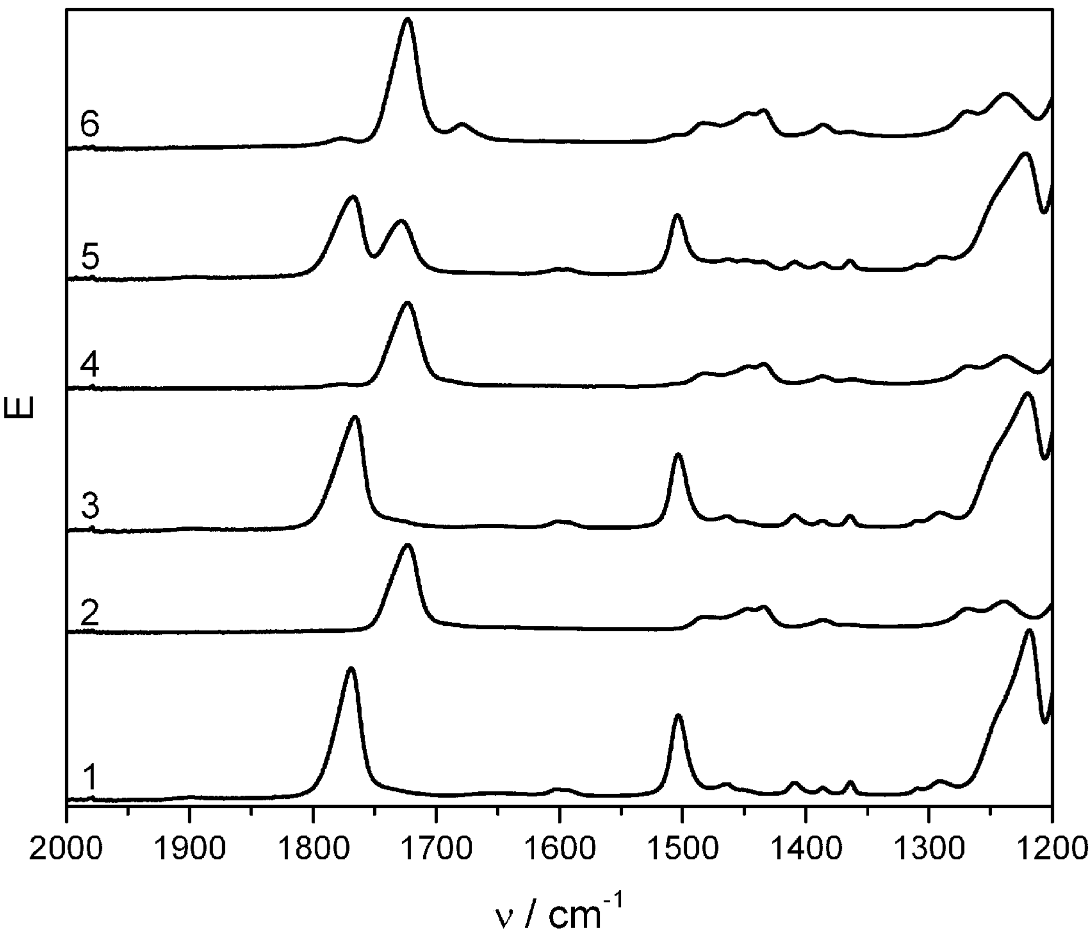

**Abbildung 2**

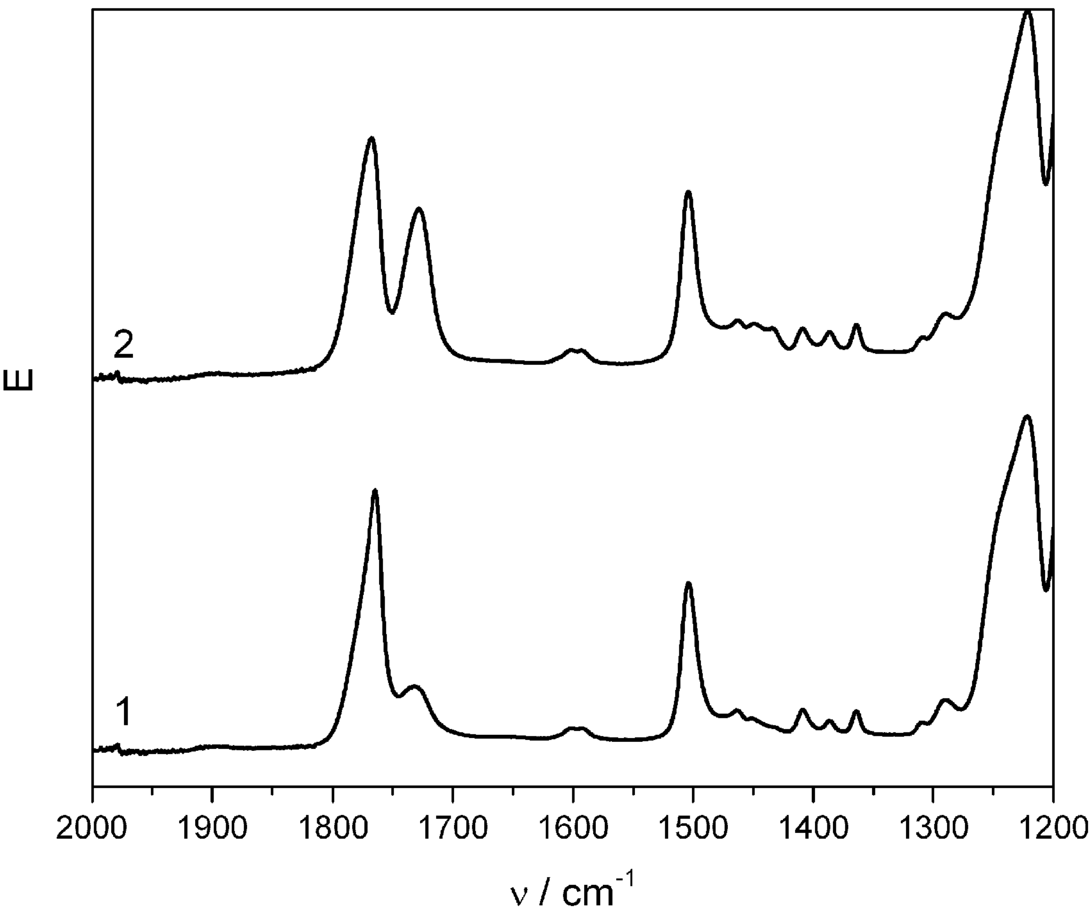

Abbildung 3

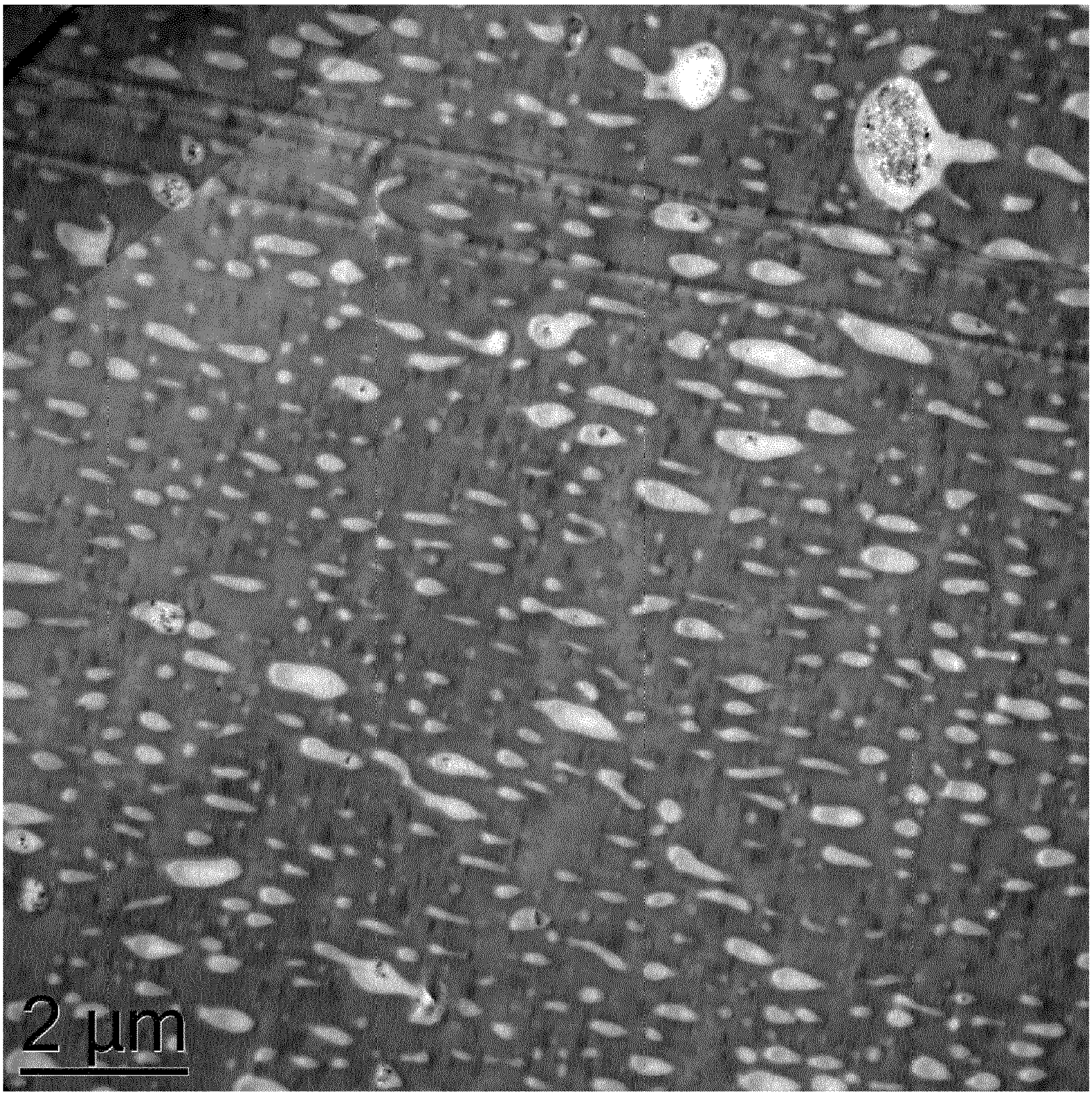

**Abbildung 4**

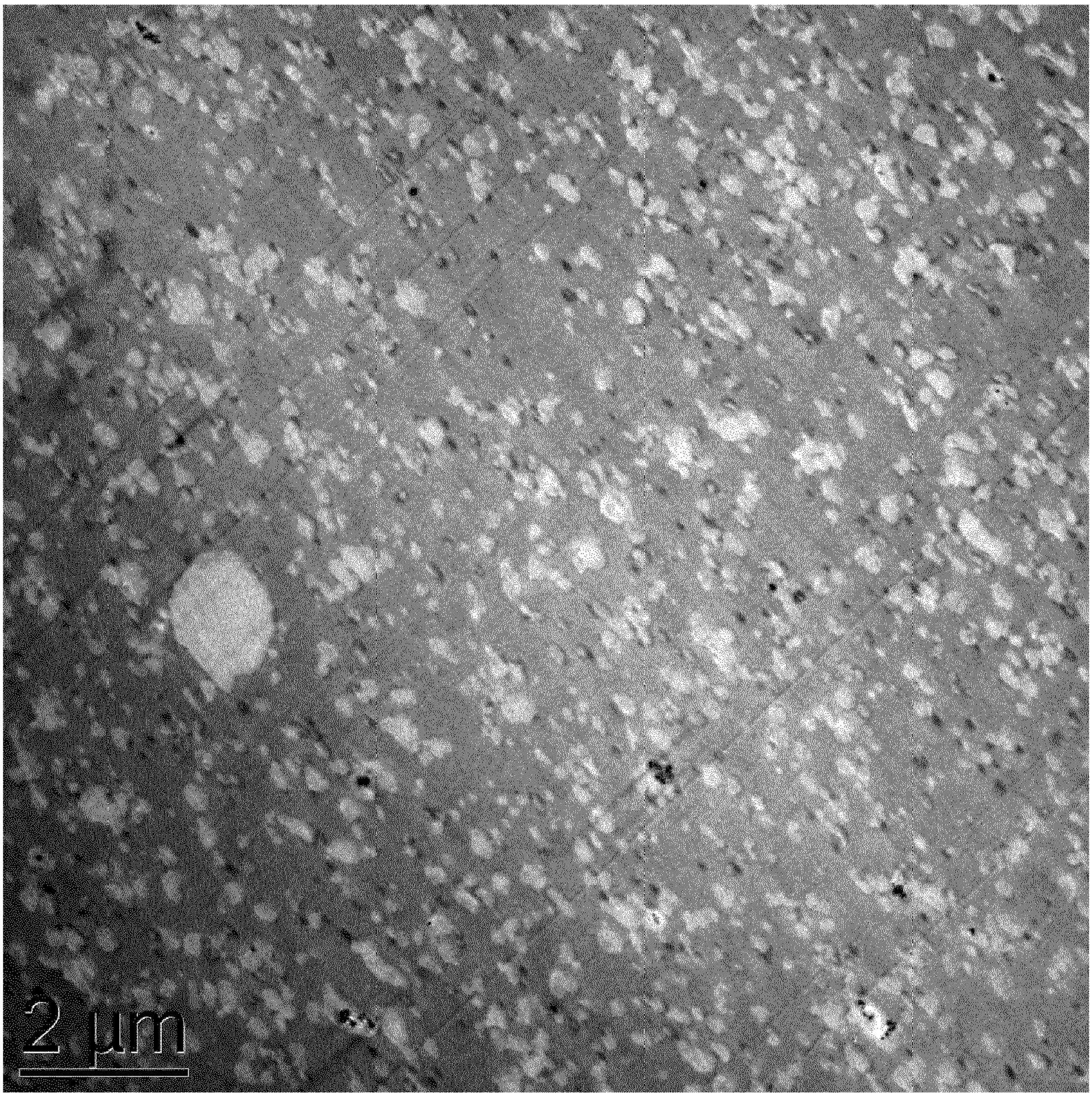

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2016138246 A1
- WO 2016189494 A1
- DE AS1495626 B
- DE 2232877 A
- DE 2703376 A
- DE 2714544 A
- DE 3000610 A
- DE 3832396 A
- DE 2842005 A
- DE 2407674 A
- DE 2407776
- DE 2715932
- DE 1900270 A
- US PS3692744 A


### In der Beschreibung aufgeführte Nicht-Patentliteratur


- **A.K. SINGH et al.** Reactive Compatibilization of Polycarbonate and Poly(methyl)methacrylate in the Presence of a Novel Transesterification Catalyst SnC12-2H20. *J. Phys. Chem. B,* 2011, vol. 115, 1601-1607
- **A.K. SINGH et al.** Evidence for in situ graft copolymer formation and compatibilization of PC and PMMA during reactive extrusion processing in the presence of the novel organometallic transesterification catalyst tin(II) 2-ethylhexanoate. *RSC Advances,* 2012, vol. 2, 10316-10323
- **M. PENCO et al.** PMMA/PC Blends: Effect of Mixing Conditions on Compatibility. *Macromol. Symp.,* 2007, vol. 247, 252-259
- **SCHNELL.** Chemistry and Physics of Polycarbonates. Interscience Publishers, 1964
- Kunststoff-Handbuch. Carl-Hanser-Verlag, 1973, vol. VIII, 695 ff
- *CHEMICAL ABSTRACTS,* 30345-49-4
- *CHEMICAL ABSTRACTS,* 34430-94-9